# EUROPÄISCHE PATENTSCHRIFT

(11) **EP 2 734 562 B1**
(45) Veröffentlichungstag und Bekanntmachung des Hinweises auf die Patenterteilung: **22.03.2017**
(21) Anmeldenummer: 12726354.9
(22) Anmeldetag: 22.05.2012
(51) Int. Cl.: C08G 18/08, C08G 18/38, C08G 71/04, C14C 11/00

(54) **VERFAHREN ZUR HERSTELLUNG VON SEITENKETTEN ENTHALTENDEN POLYURETHAN-POLYHARNSTOFFEN UND DEREN WÄSSRIGEN DISPERSIONEN**
PROCESS FOR THE PRODUCTION OF POLYURETHANE POLYUREAS CONTAINING SIDE CHAINS AND OF AQUEOUS DISPERSIONS OF THESE
PROCÉDÉ DE PRÉPARATION DE POLYURÉTHANE-POLYURÉES CONTENANT DES CHAÎNES LATÉRALES ET DE DISPERSIONS AQUEUSES DESDITS COMPOSÉS

(30) Priorität: 19.07.2011 DE 102011107873
(43) Veröffentlichungstag der Anmeldung: 28.05.2014
(73) Patentinhaber: Stahl International B.V., 5145 PE Waalwijk (NL)
(72) Erfinder: MÜNTER, Jürgen, 71336 Waiblingen-Neustadt (DE)
(74) Vertreter: V.O.
(86) Internationale Anmeldenummer: PCT/EP2012/002163
(87) Internationale Veröffentlichungsnummer: WO 2013/010606

(56) Entgegenhaltungen:
- US-A- 5 659 003
- US-A1- 2004 254 292

## Beschreibung

Die vorliegende Erfindung bezieht sich auf ein Verfahren zum Einbau von Seitenketten in hauptsächlich lineare Polyurethan-Polyharnstoff-Ketten, deren wässrigen Dispersionen, und die Verwendung der Dispersionen als Teil der Beschichtung eines flexiblen Flächensubstrates.

Die Herstellung von wässrigen Polyurethan-Polyharnstoff-Dispersionen mittels des Prepolymer-Ionomer-Verfahrens oder des Acetonverfahrens ist seit langem bekannt, z. B. aus Prog. Org. Coat. 9 (1981) 281 - 340. Hierbei wird ein isocyanatgruppenhaltiges Prepolymer in Substanz oder in Lösung hergestellt und gegebenenfalls nach Durchführung der Reaktion in Lösemitteln gelöst. Anschließend wird das Prepolymer oder die Prepolymerlösung in Wasser dispergiert und eine Kettenverlängerungsreaktion mit Polyaminen durchgeführt. Die Verlängerungsreaktion kann teilweise oder auch komplett vor dem Dispergieren erfolgen. Abschließend wird gegebenenfalls das Lösemittel abdestilliert.

Neben der elekrostatischen Stabilisierung durch Carboxylatgruppen werden wässrige Polyurethandispersionen auch durch nichtionisch, hydrophile, sterisch stabilisierend wirkende Gruppen hergestellt. Zur Erreichung dieser sterischen Stabilisierung von Polyurethandispersionen benötigt man daher lange, hydrophile, nicht mit Isocyanaten reagierende Seitenketten, die wie Dimethylolpropionsäure über zwei Hydroxylgruppen in das Polyurethanprepolymer eingebaut werden können (DE 2551094). Als besonders geeignet haben sich dabei Polyether (Polyalkylenglykole) mit zwei freien nahe benachbarten Hydroxylgruppen am gleichen Molekülende und einer langen mit einem Alkoxyende versehenen Polyalkylenseitenkette erwiesen. (S. Dedrichs, European Coating Journal, Seite 565, 5, 2002, J. Fock, DE 3049746 A1).

Die Herstellung derartiger Systeme ist jedoch sehr aufwändig und teuer und verläuft über 4 Stufen ausgehend von trifunktionellen Alkoholen wie Glycerin oder Trimethylolpropan. (J. Fock, DE 3049746 A1, EP 0043966)

DE10 2006 036 220 beschreibt die Herstellung ähnlicher Verbindungen durch Umsetzung eines α-Amino-ω-Alkoxypolyalkylenglykolen mit zwei Äquivalenten Alkylenoxid. Jedoch sind Alkylenoxide, insbesondere Ethylenoxid, aufgrund ihrer hohen Reaktivität schwierig in der Handhabung und können in vielen großtechnischen Anlagen nicht verarbeitet werden.

In Makromolecules 2008, 41, 4622-4630 wird von Fournier und Du Prez beschrieben, wie über die sogenannte "Click" Chemie verschiedene Funktionalitäten als Seitenketten in Polyurethane eingeführt werden können. Hierbei werden zunächst Polyurethane mit Acetylenfunktionen synthetisiert und anschließend durch Addition von Aziden an die Acetylene Seitenketten erzeugt. Azide sind vor allem in größeren Mengen oft schwierig in Herstellung und Handhabung.

Es ist zusätzlich bekannt, z. B. aus H. Tomita et al. Journal of Polymer Science Part A: Polymer Chemistry 2001 (39), Seiten 162 - 168, dass Amine mit cyclischen Carbonaten in einer Additionsreaktion unter Ringöffnung zu Hydroxyurethanen reagieren.

US-5,659,003 offenbart in Beispiel 3 die Herstellung einer wässrigen PUR-Polyharnstoff-Dispersion wobei in einer ersten Verfahrensstufe aus Ammoniak und einem Hydroxyalkyl cyclischen Carbonat ein Glykolcarbamat hergestellt wird, das in einer zweiten Verfahrensstufe mit IDPI, einem Polyesterpolyol, NPG, DMPS zur Polyurethanzusammensetzung umgesetzt wird, und in einem letzten Verfahrensstufe in Wasser dispergiert wird.

US-2004/254292 offenbart die Herstellung einer wässrigen PUR-Polyharnstoff-Dispersion wobei in einer ersten Verfahrensstufe aus Ethylendiamin und einem Propylen-carbonat ein Urethandiol hergestellt wird, das in einer zweiten Verfahrensstufe mit IDPI, einem Polyesterpolyol, NPG, DMPS und Ethylendiamin zur Polyurethanzusammensetzung umgesetzt wird, die in einem letzten Verfahrensstufe in Wasser dispergiert wird.

Die angeführten Beispiele für Seitenketten in Polyurethanen zeigen, wie wichtig es ist, bei der Herstellung von Polyurethan-Polyharnstoff-Dispersionen gezielt Seitenketten einführen zu können.

Ausgehend vom Stand der Technik bestand daher die Aufgabe, ein einfaches, breit anwendbares, leicht handhabbares und günstiges Verfahren zur Verfügung zu stellen, das die Einführung von Seitenketten in die hauptsächlich linearen Polyurethan-Polyharnstoffketten ermöglicht.

Überraschenderweise wurde nun gefunden, dass die Umsetzung von primären und/oder sekundären Monoaminen oder Diaminen mit cyclischen Carbonaten, die genau eine Hydroxylgruppe enthalten, und gegebenenfalls Umsetzung der zweiten Aminfunktion von Diaminen mit Verbindungen, die genau eine funktionelle Gruppe tragen, die mit primären oder sekundären Aminen in einer Additionsreaktion reagieren, auf sehr einfache und günstige Weise zu Zwischenprodukten führen, durch deren Umsetzung mit Polyisocyanaten und anderen isocyanatreaktiven Verbindungen sich Polyurethan-Polyharnstoff-Prepolymere herstellen lassen, die durch Dispergierung in Wasser und Verlängerung mit isocyanatreaktiven Polyaminen zu dispergierten, Seitenketten tragenden Polyurethan-Polyharnstoff-Polymeren führen und somit diese Aufgabe lösen.

Gegenstand der Erfindung ist somit ein Verfahren zur Herstellung wässriger Polyurethan-Polyharnstoff-Dispersionen, bei denen
A) zunächst
   A1) primäre und/oder sekundäre Monoamine oder Diamine mit
   A2) cyclischen Carbonaten umgesetzt werden, die genau eine Hydroxylgruppe enthalten, wobei das molare Verhältnis von A1) und A2) so bemessen ist, dass im Falle von Monoaminen A1) ein rechnerisches Verhältnis der Summe der primären und sekundären Amin-Gruppen zu den cyclischen Carbonat-Gruppen von 0,8 bis 1,2 erreicht wird und im Falle von Diaminen A1) ein rechnerisches Verhältnis der Summe der primären und sekundären Amin-Gruppen zu den cyclischen Carbonat-Gruppen von 1,8 bis 2,2 erreicht wird und
   A3) im Falle von Diaminen A1) die verbleibenden primären und sekundären Amin-Gruppen mit Verbindungen umgesetzt werden, die genau eine funktionelle Gruppe tragen, welche mit primären oder sekundären Aminen in einer Additionsreaktion reagiert, so dass keine isocyanatreaktiven Gruppen entstehen, wobei die Stoffmenge von A3) so bemessen ist, dass ein rechnerisches Verhältnis der Summe der rechnerisch nach Umsetzung von A1) und A2) verbleibenden primären und sekundären Amin-Gruppen zu den aminreaktiven Gruppen in A3) von 0,8 bis 1,2 erreicht wird,
   wobei die Umsetzung mit A3) nach, zeitgleich oder vor der Umsetzung mit A2) erfolgen kann, und worin die Umsetzung von A1) mit A2) in Substanz ohne Lösemittel durchgeführt wird,
B) anschließend ein NCO-gruppenhaltiges Polyurethan-Prepolymer durch Umsetzung von
   B1) Polyisocyanaten mit
   B2) polymeren Polyolen und/oder Polyaminen mit zahlenmittleren Molekulargewichten von mehr als 400 bis 8.000 g/mol,
   B3) gegebenenfalls niedermolekularen Verbindungen mit zahlenmittleren Molekulargewichten von 17 - 400 g/mol ausgewählt aus der Gruppe bestehend aus Mono- und Polyalkoholen, Mono- und Polyaminen sowie Aminoalkoholen,
   B4) gegebenenfalls isocyanatreaktiven, ionisch oder potentiell ionisch hydrophilierenden Verbindungen und/oder isocyanatreaktiven nichtionisch hydrophilierenden Verbindungen und
   B5) den Reaktionsprodukten aus A)
   erzeugt wird,
C) das Prepolymer aus B) in Wasser dispergiert wird und
D) gegebenenfalls die noch freien NCO-Gruppen des Prepolymers mit isocyanatreaktiven Monoaminen, Polyaminen, Hydrazin und/oder Hydraziden umgesetzt werden, wobei deren Stoffmenge so bemessen ist, dass ein rechnerisches Verhältnis der isocyanatreaktiven NH-Gruppen zu den NCO-Gruppen von 0 bis 1,2 erreicht wird, wobei die Umsetzung D) teilweise oder auch vollständig vor oder während des Dispergierschritts C) erfolgen kann.

Erfindungswesentlich sind die Umsetzungen in Schritt A), durch die aus einer isocyanatreaktiven Aminfunktion zwei isocyanatreaktive Alkoholfunktionen hergestellt werden und gegebenenfalls eine weitere isocyanatreaktiven Aminfunktion unreaktiv gegenüber Isocyanat gemacht wird, so dass der Einbau der Gruppen an der Aminfunktion von A1) in das Polyurethan-Polyharnstoff-Polymer als Seitenkette und nicht als Teil der Polymerhauptkette erfolgt.

Ein weiterer Gegenstand der Erfindung sind wässrige Polyurethan-Polyharnstoff-Dispersionen, die nach obigem Verfahren herstellbar oder erhältlich sind.

Ein weiterer Gegenstand der Erfindung ist die Verwendung der erfindungsgemäß hergestellten Polyurethan-Polyharnstoff-Dispersionen zur Herstellung von Beschichtungen, z.B. zur Beschichtung von flexiblen Flächensubstraten, insbesondere Leder.

Ein weiterer Gegenstand der Erfindung ist ein Verfahren zur Beschichtung von flexiblen Flächensubstraten, insbesondere Leder, indem auf das flexible Flächensubstrat, insbesondere das Leder die erfindungsgemäße Polyurethan-Polyharnstoff-Dispersion aufgetragen wird.

Weitere Gegenstände der Erfindung sind Beschichtungen erhältlich aus wässrigen Polyurethan-Polyharnstoff-Dispersionen gemäß der Erfindung; und Substrate, insbesondere flexibele Flächensubstrate, beschichtet damit.

Geeignete primäre und sekundäre Monoamine nach A1) sind bevorzugt Verbindungen der Strukturformel (1), 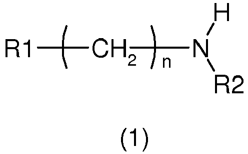 wobei
- R1: aus der Gruppe der Polyalkylenglykole mit Molekulargewichten bis zu 6.000 g/mol, der Kohlenwasserstoffe mit 1 bis 26 Kohlenstoffatomen, den Verbindungen bestehend aus 1-20 Kohlenstoffatomen,
0-41 Wasserstoffatomen und 1-15 der Heteroatome Bor, Silicium, Stickstoff, Phosphor, Sauerstoff, Schwefel, Chlor, Brom und/oder Iod, der teilweise und/oder vollständig fluorierten Kohlenwasserstoffe mit 1 bis 26 Kohlenstoffatomen oder der Polysiloxane mit Molekulargewichten bis zu 5.000 g/mol ausgewählt ist,
- R2: Wasserstoff oder ein Kohlenwasserstoff mit ein bis 18 Kohlenstoffatomen, und
- n: 0 bis 12 ist.

In einer besonders bevorzugten Ausführungsform der Erfindung ist R1 aus der Gruppe der Polyalkylenglykole mit Molekulargewichten von 400 bis 3.000 g/mol ausgewählt.

In einer weiteren besonders bevorzugten Ausführungsform der Erfindung ist R1 aus der Gruppe der Kohlenwasserstoffe mit 4 bis 18 Kohlenstoffatomen ausgewählt. Weiterhin bevorzugt ist, dass R1 ein aliphatischer Kohlenwasserstoff ist.

In einer weiteren besonders bevorzugten Ausführungsform der Erfindung ist R1 aus der Gruppe der Verbindungen bestehend aus 4-18 Kohlenstoffatomen, 4-37 Wasserstoffatomen und 1-15 der Heteroatome Bor, Silicium, Stickstoff, Phosphor, Sauerstoff, Schwefel, Chlor, Brom und/oder Iod ausgewählt.

In einer weiteren besonders bevorzugten Ausführungsform der Erfindung ist R1 aus der Gruppe der teilweise und/oder vollständig fluorierten Kohlenwasserstoffe mit 4 bis 18 Kohlenstoffatomen ausgewählt.

In einer weiteren besonders bevorzugten Ausführungsform der Erfindung ist R1 aus der Gruppe der Polysiloxane mit Molekulargewichten von 400 bis 3.000 g/mol ausgewählt.

In einer weiteren besonders bevorzugten Ausführungsform der Erfindung steht R2 für Wasserstoff.

In einer weiteren besonders bevorzugten Ausführungsform der Erfindung steht n für eine Zahl von 1 bis 6.

Besonders bevorzugt sind primäre Monoamine nach A1), worin
- R1: aus der Gruppe der Polyalkylenglykole mit Molekulargewichten bis zu 6.000 g/mol, der Kohlenwasserstoffe mit 1 bis 26 Kohlenstoffatomen, den Verbindungen bestehend aus 1-20 Kohlenstoffatomen,
0-41 Wasserstoffatomen und 1-15 der Heteroatome Bor, Silicium, Stickstoff, Phosphor, Sauerstoff, Schwefel, Chlor, Brom und/oder Iod, der teilweise und/oder vollständig fluorierten Kohlenwasserstoffe mit 1 bis 26 Kohlenstoffatomen oder der Polysiloxane mit Molekulargewichten bis zu 5.000 g/mol, ausgewählt ist,
Besonders bevorzugt sind primäre Monoamine nach A1), worin
- R2: Wasserstoff, und
- n: 0 bis 6 ist.

Geeignete primäre und sekundäre Diamine nach A1) sind bevorzugt Verbindungen der Strukturformel (2), 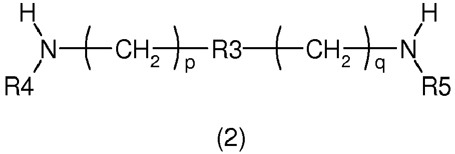 wobei
- R3: aus der Gruppe der Polyalkylenglykole mit Molekulargewichten bis zu 6.000 g/mol, der Kohlenwasserstoffe mit 1 bis
26 Kohlenstoffatomen, den Verbindungen bestehend aus 1-20 Kohlenstoffatomen, 0-41 Wasserstoffatomen und 1-15 der Heteroatome Bor, Silicium, Stickstoff, Phosphor, Sauerstoff, Schwefel, Chlor, Brom und/oder Iod, der teilweise und/oder vollständig fluorierten Kohlenwasserstoffe mit 1 bis
26 Kohlenstoffatomen oder der Polysiloxane mit Molekulargewichten bis zu 5.000 g/mol ausgewählt ist,
- R4 und R5: unabhängig voneinander Wasserstoff oder Kohlenwasserstoffe mit ein bis 18 Kohlenstoffatomen, und
- p und q: unabhängig voneinander 0 bis 12 sind.

In einer besonders bevorzugten Ausführungsform der Erfindung ist R3 aus der Gruppe der Polyalkylenglykole mit Molekulargewichten von 400 bis 3.000 g/mol ausgewählt.

In einer weiteren besonders bevorzugten Ausführungsform der Erfindung ist R3 aus der Gruppe der Kohlenwasserstoffe mit 4 bis 18 Kohlenstoffatomen ausgewählt. Weiterhin bevorzugt ist, dass R1 ein aliphatischer Kohlenwasserstoff ist.

In einer weiteren besonders bevorzugten Ausführungsform der Erfindung ist R3 aus der Gruppe der Verbindungen bestehend aus 4-18 Kohlenstoffatomen, 4-37 Wasserstoffatomen und 1-15 der Heteroatome Bor, Silicium, Stickstoff, Phosphor, Sauerstoff, Schwefel, Chlor, Brom und/oder Iod ausgewählt.

In einer weiteren besonders bevorzugten Ausführungsform der Erfindung ist R3 aus der Gruppe der teilweise und/oder vollständig fluorierten Kohlenwasserstoffe mit 4 bis 18 Kohlenstoffatomen ausgewählt.

In einer weiteren besonders bevorzugten Ausführungsform der Erfindung ist R3 aus der Gruppe der Polysiloxane mit Molekulargewichten von 400 bis 3.000 g/mol ausgewählt.

In einer weiteren besonders bevorzugten Ausführungsform der Erfindung stehen R4 und R5 für Wasserstoff.

In einer weiteren besonders bevorzugten Ausführungsform der Erfindung stehen p und q unabhängig voneinander für Zahlen von 1 bis 6.

Bevorzugt sind primäre Diamine nach A1),
worin
- R3: aus der Gruppe der Polyalkylenglykole mit Molekulargewichten bis zu 6.000 g/mol, der Kohlenwasserstoffe mit 1 bis
26 Kohlenstoffatomen, den Verbindungen bestehend aus 1-20 Kohlenstoffatomen, 0-41 Wasserstoffatomen und 1-15 der Heteroatome Bor, Silicium, Stickstoff, Phosphor, Sauerstoff, Schwefel, Chlor, Brom und/oder Iod, der teilweise und/oder vollständig fluorierten Kohlenwasserstoffe mit 1 bis 26 Kohlenstoffatomen oder der Polysiloxane mit Molekulargewichten bis zu 5.000 g/mol ausgewählt ist,
- R4 und R5: Wasserstoff und
- p und q: unabhängig voneinander 0 bis 6 sind.

Geeignete cyclische Carbonate mit einer Hydroxylgruppe nach A2) entsprechen bevorzugt der Strukturformel (5), 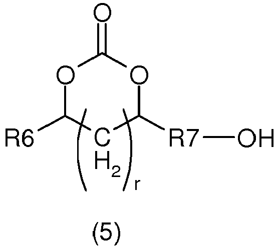 wobei
- R6: Wasserstoff oder ein Kohlenwasserstoffrest mit 1 bis 18 Kohlenstoffatomen,
- R7: nicht vorhanden oder ein Kohlenwasserstoffrest mit 1 bis 18 Kohlenstoffatomen, und
- r: 0 bis 3 ist.

Besonders bevorzugt sind Verbindungen, bei denen
- R6: Wasserstoff oder ein Alkylrest mit 1 bis 12 Kohlenstoffatomen,
- R7: nicht vorhanden oder ein Alkandiylrest mit 1 bis 12 Kohlenstoffatomen und
- r: 0 oder 1 ist.

Ganz besonders bevorzugt steht Formel (5) für 4-(Hydroxymethyl)-1,3-dioxolan-2-on.

Die oben angegebenen Definitionen für die Reste R1 und R3 sind so zu verstehen, dass R1 und R3 durch die formale Abstraktion eines Wasserstoffatoms im Fall von R1 und zweier Wasserstoffatome im Fall von R3 aus den Verbindungen der angegebenen Art erhalten werden. Stehen R1 und R3 in diesem Sinne für Verbindungen, welche aus 1-20 Kohlenstoffatomen,
0-41 Wasserstoffatomen und 1-15 der Heteroatome Bor, Silicium, Stickstoff, Phosphor, Sauerstoff, Schwefel, Chlor, Brom und/oder Iod bestehen, so handelt es sich dabei im allgemeinen um Kohlenwasserstoffe, welche funktionelle Gruppen mit Heteroatomen tragen. Die bevorzugten Verbindungsklassen, zu denen diese Kohlenwasserstoffe, welche funktionelle Gruppen mit Heteroatomen tragen gehören, sind
Halogenierte Kohlenwasserstoffe, Heterocyclische Verbindungen mit N, O, S als Heteroatomen, Urethane, Thiourethane, Harnstoffe, Thioharnstoffe, Carbonsäureester und -amide, Kohlensäureester, Lactone, Lactame, Carbonsäureanhydride, Carbonsäureimide, Carbodiimide, Ketone, Thioketone, Ether, Thioether, Acetale, Ketale, Nitrile, Amidine, Azide, Nitrogruppen, Tertiäre Amine, quarternäre Ammoniumgruppen, Mono-, Di- oder Trialkoxysilane, Schwefelsäureester und deren Salze, Sulfonsäureester und deren Salze, Sulfone, Sulfonsäureamide, Phosphorsäureester und deren Salze, Phosphonsäureester und deren Salze, Phosphine und Phosphinoxide.

### Unter diesen sind

Heterocyclische Verbindungen mit N, O, S als Heteroatomen, Urethane, Harnstoffe, Carbonsäureester und -amide, Kohlensäureester, Lactone, Lactame, Ketone, Ether, Acetale, Ketale, Tertiäre Amine und quarternäre Ammoniumgruppen, Mono-, Di- oder Trialkoxysilane, Schwefelsäureester und deren Salze, Sulfonsäureester und deren Salzebesonders bevorzugt.

Geeignete Verbindungen nach A3) tragen genau eine funktionelle Gruppe, die mit primären oder sekundären Aminen in einer Additionsreaktion reagieren, so dass keine isocyanatreaktiven Gruppen entstehen. Außerdem tragen Verbindungen nach A3) keine weiteren Gruppen, welche isocyanatreaktiv sind.
Funktionelle Gruppen, die mit primären oder sekundären Aminen in einer Additionsreaktion reagieren, so dass keine isocyanatreaktiven Gruppen entstehen, können beispielsweise sein: Isocyanate, Isothiocyanate, Carbodiimide, Ketene, Nitrile, Isonitrile, cyclische Anhydride von Dicarbonsäuren oder Olefine. Bevorzugte Verbindungen nach A3) sind Monoisocyanate.
Besonders bevorzugte Verbindungen nach A3) sind Monoisocyanate deren Isocyanatgruppen nicht direkt mit einer aromatischen Gruppe verknüpft sind. Dies können insbesondere Alkylmonoisocyanate, Cycloalkylmonoisocyanate oder Arylalkylmonoisocyanate sein.

Im erfindungsgemäßen Verfahren unterscheidet sich in Reaktionsschritt A) die Vorgehensweise je nachdem, ob als Komponenten A1) Monoamine oder Diamine verwendet werden. Bei Einsatz von Monoaminen A1) ist lediglich die Umsetzung mit Komponenten A2) erforderlich, eine Umsetzung mit Komponenten A3) entfällt. Werden Diamine A1) eingesetzt, ist eine Umsetzung mit Komponenten A2) und Komponenten A3) erforderlich. Die Umsetzung von Diaminen A1) mit Komponenten A2) und A3) kann zeitgleich oder nacheinander erfolgen, wobei die Reihenfolge beliebig ist. Sowohl bei Monoaminen als auch bei Diaminen A1) können die Umsetzungen mit Komponenten A2) und gegebenenfalls A3) in einem oder mehreren Schritten erfolgen. Bevorzugt findet die Umsetzung von A1) mit A2) in einem Schritt statt.

Die Reaktion der Komponenten A1) und der Komponenten A2) und gegebenenfalls A3) kann teilweise oder vollständig in Anwesenheit eines Lösemittels oder in Substanz ohne Lösemittel erfolgen. In einer bevorzugten Ausführungsform der Erfindung wird die Umsetzung der Komponenten A1) mit den Komponenten A2) in Substanz ohne Lösemittel durchgeführt. Bei Verwendung eines Lösemittels kann dieses vor dem Schritt B) entfernt werden oder in der Mischung belassen werden. Soll das Lösemittel in der Mischung belassen werden, sind Ketone und Ester als Lösemittel bevorzugt und Methylethylketon, Aceton und Methylacetat besonders bevorzugt.

Die Umsetzung der Komponenten A1) und der Komponenten A2) und gegebenenfalls A3) erfolgt bevorzugt bei Temperaturen zwischen - 10 °C und + 100 °C. In einer besonders bevorzugten Ausführungsform der Erfindung wird die Umsetzung der Komponenten A1) mit den Komponenten A2) bei Temperaturen von 15 - 90 °C und gegebenenfalls die Umsetzung mit Komponenten A3) bei Temperaturen von 10 - 50 °C durchgeführt.

Die Umsetzung der Komponenten A1) und der Komponenten A2) und gegebenenfalls A3) erfolgt bevorzugt bei Drucken von 0,8 - 5 bar.

Die Produkte aus der Umsetzung von Diaminen A1) mit A2) oder Diaminen A1) mit A3) können sofort für die Umsetzung mit A3) beziehungsweise A2) weiter verwendet werden oder zwischengelagert werden. Ebenfalls können die Produkte oder deren Lösungen aus Verfahrensschritt A) sofort für die Umsetzung B) verwendet oder zwischengelagert werden.

In einer bevorzugten Ausführungsform der Erfindung wird die Umsetzung A) ohne die Verwendung von Katalysatoren durchgeführt.

Die Umsetzungen im Verfahrensschritt A) können in der Reaktionsmischung verfolgt werden. Dazu können sowohl spektroskopische Messungen, z. B. Infrarot- oder Nahinfrarot-Spektren, Bestimmungen des Brechungsindex als auch chemische Analysen, wie Titrationen, von entnommenen Proben vorgenommen werden. Diese Bestimmungsmethoden sind dem Fachmann bekannt. Beispielsweise kann der Restgehalt an Amingruppen mittels Titration bestimmt werden. Es kann beispielsweise auch mittels IR-Spektroskopie verfolgt werden, wie bei der Umsetzung von A1) mit A2) die Bande der Valenzschwingung der C=O-Doppelbindung des Carbonats A2) verschwindet und die Bande der Valenzschwingung der C=O-Doppelbindung des Urethans des Reaktionsprodukts größer wird. Bei der Umsetzung mit A3) lässt sich beispielsweise das Verschwinden der Bande der Mehrfachbindung der Komponente A3) beobachten, was besonders gut im Falle von Isocyananten A3) gelingt.

Geeignete Polyisocyanate nach B1) haben die Formel X(NCO)ₚ, worin p eine Zahl von mehr als 1 bis 4, bevorzugt von 2 bis 3, besonders bevorzugt von 2 und X ein aliphatischer, cycloaliphatischer, aromatischer oder araliphatischer Kohlenwasserstoffrest ist. Vorzugsweise steht X für einen aliphatischen Kohlenwasserstoffrest mit 3 bis 20 Kohlenstoffatomen, einen cycloaliphatischen Kohlenwasserstoffrest mit 5 bis 15 Kohlenstoffatomen, einen aromatischen Kohlenwasserstoffrest mit 6 bis 15 Kohlenstoffatomen, oder einen araliphatischen Kohlenwasserstoffrest mit 7 bis 15 Kohlenstoffatomen. Besonders bevorzugt sind Diisocyanate, deren Isocyanatgruppen nicht direkt mit einer aromatischen Gruppe verknüpft sind. Finden Polyisocyanate der Formel X(NCO)ₚ Verwendung, die Gemische von Verbindungen mit unterschiedlicher Anzahl von Isocyanatgruppen sind, so ist p das Zahlenmittel der vorhandenen Isocyanatgruppen.

Beispiele derartiger Diisocyanate sind Tetramethylendiisocyanat, Hexamethylendiisocyanat, Dodecamethylendiisocyanat, 1,4-Diisocyanatocyclohexan, 1-Isocyanato-3,5,5-trimethyl-5-isocyanatomethylcyclohexan (IPDI), 2,2-Bis-(4-isocyanatocyclohexyl)-propan, Trimethylhexandiisocyanat, 1,4-Diisocyanatobenzol, 2,4-Diisocyanatotoluol, 2,6-Diisocyanatotoluol, 4,4'-Diisocyanatodiphenylmethan, 2,4'-Diisocyanatodiphenylmethan, p-Xylylendiisocyanat, Tetramethylxylylendiisocyanat (TMXDI), die Isomeren des 4,4'-Diisocyanatodicyclohexylmethans wie das trans/trans-, das cis/-cis- und das cis/trans-Isomere sowie aus diesen Verbindungen bestehende Gemische.

Polymere Polyole oder Polyamine gemäß B2) stammen typischerweise aus der Gruppe der hydroxyl- oder aminogruppenhaltigen Polycarbonate, Polyester, Polyether, Polyacrylate, Polyolefine und Polysiloxane, wie sie bekannt sind z. B. aus Ullmann's Encyclopedia of Industrial Chemistry 2005, DOI: 10.1002/14356007.a21_665.pub2 "Polyurethane", Kapitel 3, W. Friederichs.

Geeignete Polycarbonatpolyole sind solche, wie sie z. B. durch Umsetzung von Phosgen mit einem Überschuss an mehrwertigen Alkoholen erhalten werden können. Als zweiwertige Alkohole kommen z. B. Ethylenglykol, Propan-1,2-diol, Propan-1,3-diol, Butan-1,2-diol, Butan-1,3-diol, Butan-1,4-diol, Buten-1,4-diol, Butin-1,4-diol, Pentan-1,5-diol, Neopentylglykol, 2-Butyl-2-ethyl-1,3-propandiol, Bis(hydroxymethyl)-cyclohexane wie 1,4-Bis(hydroxy-methyl)cyclohexan, 2-Methylpropan-1,3-diol, Methylpentandiole, ferner Diethylenglykol, Triethylenglykol, Tetraethylenglykol, Polyethylenglykol, Dipropylenglykol, Polypropylenglykol, Dibutylenglykol und Polybutylenglykole in Betracht.

Bevorzugt sind Alkohole der allgemeinen Formel HO-(CH₂)ₓ-OH, wobei x eine Zahl von 1 bis 20, bevorzugt eine Zahl von 2 bis 20 ist. x ist vorzugsweise eine gerade Zahl. Beispiele hierfür sind Ethylenglykol, Butan-1,4-diol, Hexan-1,6-diol, Octan-1,8-diol und Dodecan-1,12-diol. Weiterhin bevorzugt sind Neopentylglykol 2-Butyl-2-ethyl-1,3-propandiol und Methylpentandiole. Anteilig können auch höherwertige Alkohole verwendet werden, wie z. B. Glycerin, Trimethylolpropan, 1,2,6-Hexantriol, 1,2,4-Butantriol, Pentaerythrit, Chinit, Mannit und Sorbit.

Ferner kommen auch Polyesterpolyole in Frage, die durch Umsetzung von mehrwertigen Alkoholen mit mehrwertigen Carbonsäuren erhalten werden. Anstelle der freien Polycarbonsäuren können auch die entsprechenden Polycarbonsäureanhydride oder entsprechende Polycarbonsäureester von niederen Alkoholen oder deren Gemische zur Herstellung der Polyesterpolyole verwendet werden. Die Polycarbonsäuren können aliphatisch, cycloaliphatisch, araliphatisch, aromatisch oder heterocyclisch sein und gegebenenfalls, z. B. durch Halogenatome, substituiert und/oder ungesättigt sein. Als Beispiele hierfür seien genannt: Korksäure, Azelainsäure, Phthalsäure, Isophthalsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, dimere Fettsäuren. Bevorzugt sind Dicarbonsäuren der allgemeinen Formel HOOC-(CH₂)_{y}-COOH, wobei y eine Zahl von 1 bis 20, bevorzugt eine gerade Zahl von 2 bis 20 ist, z. B. Bernsteinsäure, Adipinsäure, Sebacinsäure und Dodecandicarbonsäure. Als mehrwertige Alkohole, bevorzugt Diole, kommen die als Aufbaukomponenten für die Polycarbonatpolyole genannten niedermolekularen Alkohole in Betracht.

Geeignet sind auch Polyesterdiole auf Lacton-Basis, wobei es sich um Homo- oder Mischpolymerisate von Lactonen, bevorzugt um endständige Hydroxylgruppen aufweisende Anlagerungsprodukte von Lactonen an geeignete polyfunktionelle Startermoleküle handelt. Als Lactone kommen bevorzugt solche in Betracht, die sich von Verbindungen der allgemeinen Formel HO-(CH₂)_{z}-COOH ableiten, wobei z eine Zahl von 1 bis 20 ist und ein H-Atom einer Methyleneinheit auch durch einen C₁- bis C₄-Alkylrest substituiert sein kann. Beispiele sind ε-Caprolacton, β-Propiolacton, γ-Butyrolacton und/oder Methyl-ε-caprolacton sowie deren Gemische. Geeignete Starterkomponenten sind z. B. die vorstehend als Aufbaukomponente für die Polycarbonatpolyole genannten niedermolekularen mehrwertigen Alkohole. Die entsprechenden Polymerisate des ε-Caprolactons sind besonders bevorzugt. Auch niedere Polyesterdiole oder Polyetherdiole können als Starter zur Herstellung der Lacton-Polymerisate eingesetzt sein.

Anstelle der Polymerisate von Lactonen können auch die entsprechenden, chemisch äquivalenten Polykondensate der den Lactonen entsprechenden Hydroxycarbonsäuren, eingesetzt werden.

Daneben kommen als Polyole Polyetherdiole in Betracht. Sie sind insbesondere durch Polymerisation von Ethylenoxid, Propylenoxid, Butylenoxid, Tetrahydrofuran, Styroloxid, Epichlorhydrin oder teilfluorierte oder perfluorierte Derivate dieser Verbindungen mit sich selbst, z. B. in Gegenwart von BF₃ oder durch Anlagerung dieser Verbindungen gegebenenfalls im Gemisch oder nacheinander, an Startkomponenten mit reaktionsfähigen Wasserstoffatomen, wie Alkohole oder Amine, z. B. Wasser, Ethylenglykol, Propan-1,2-diol, Propan-1,3-diol, 1,2-Bis(4-hydroxydiphenyl)-propan oder Anilin erhältlich.

Ebenfalls geeignet sind Polyhydroxyolefine, bevorzugt solche mit 2 endständigen Hydroxylgruppen, z. B. α-,ω-Dihydroxypolybutadien, α-,ω-Dihydroxypolymethacrylester oder α-,ω-Dihydroxypolyacrylester als Monomere. Solche Verbindungen sind beispielsweise aus EP 0 622 378 A1 bekannt. Weitere geeignete Polyole sind Polyacetale, Polysiloxane und Alkydharze.

Geeignete niedermolekulare Verbindungen nach B3) sind die vorstehend als Aufbaukomponente für die Polycarbonatpolyole genannten niedermolekularen mehrwertigen Alkohole, bevorzugt Diole und Triole.

Daneben kommen auch Monoalkohole in Betracht, bevorzugt primäre oder sekundäre Alkohole, wie z. B. Methanol, Ethanol, Propanol, Isopropanol, 1-Butanol, 2-Butanol, Isobutanol, 1-Hexanol, 1-Octanol, 2-Ethylhexanol, 1-Decanol, 1-Dodecanol, 1-Tetradecanol, 1-Hexadecanol, 1-Octadecanol und 1-Eicosanol.

Ebenfalls geeignet sind Amine oder Aminoalkohole, die man beispielsweise durch Austausch der Alkoholgruppen, der in den letzten beiden Abschnitten genannten Alkohole durch Amingruppen oder Monoalkylamingruppen, erhält.

Als ionisch oder potentiell ionisch hydrophilierende Verbindungen nach B4) werden sämtliche Verbindungen verstanden, die mindestens eine gegenüber Isocyanat reaktive Gruppe, bevorzugt Hydroxyl- oder Aminogruppe, sowie mindestens eine Funktionalität aufweisen, die ionisch oder potentiell ionisch ist. Beispiele für ionische und potentiell ionische Gruppen sind -COOY, -SO₃Y, -PO(OY)₂ (Y beispielsweise = H, NH₄⁺, Metallkation), -NR₂, -NR₃⁺ (R = H, Alkyl, Aryl). Geeignete ionisch oder potentiell ionisch hydrophilierende Verbindungen sind dem Fachmann bekannt und beispielsweise in DE 10 2004 002 526 A1 im Abschnitt [0032] genannt beziehungsweise erklärt.

Als isocyanatreaktive, nichtionisch hydrophilierende Verbindungen nach B4) werden Polyoxyalkylenether verstanden, die mindestens eine Hydroxy- oder Aminogruppe enthalten. Geeignete nichtionisch hydrophilierende Verbindungen sind dem Fachmann bekannt und in DE 10 2004 002 526 A1 in den Abschnitten [0035] bis [0039] oder auch in DE 10 2006 036220 A1 genannt beziehungsweise erklärt.

Enthalten die Verbindungen nach B5) ionische, potentiell ionische oder nichtionische hydrophilierende Gruppen wie bei B4) beschrieben, so können die Verbindungen nach B5) die Verbindungen nach B4) ersetzen und deren hydrophilierende Wirkung für die Dispergierbarkeit des Prepolymers übernehmen.

Zur Dispergierung des Prepolymers können auch Emulgatoren und Tenside verwendet werden, die chemisch nicht in das Prepolymer eingebunden sind. Diese Vorgehensweise ist aber nicht bevorzugt.

Im erfindungsgemäßen Verfahren werden für die Herstellung des NCO-gruppenhaltigen Polyurethan-Prepolymers vorzugsweise 10 bis 45 Gew.-% Komponente B1), 30 bis 80 Gew.-% Komponente B2), 0 bis 10 Gew.-%, insbesondere 0,1 bis 9 Gew.-% Komponente B3), 0 bis 20 Gew.-%, insbesondere 0,1 bis 19 Gew.-% Komponente B4) und 0,1 bis 40 Gew.-% Komponente B5) zur Reaktion gebracht, wobei sich die Summe aller Komponenten zu 100 Gew.-% aufaddiert.

Das erfindungsgemäße Verfahren umfasst im allgemeinen einen Schritt, in dem Bestandteil B1) mit den Bestandteilen B2) bis B5) und gegebenenfalls einem Lösemittel unterhalb der Reaktionstemperatur gemischt wird. Die Reihenfolge der Zugabe des Bestandteils B1), der Bestandteile B2) bis B5) und gegebenenfalls des Lösemittels ist beliebig. Die Reaktion des Bestandteils B1) und der Bestandteile B2) bis B5) wird vorzugsweise durch Temperaturerhöhung eingeleitet. Bevorzugte Lösemittel sind Ketone oder Ester, besonders bevorzugt sind Aceton oder Methylacetat. Bevorzugt wird die Reaktion bei Temperaturen im Bereich von 50 bis 120 °C durchgeführt.

Die Reaktion des Bestandteils B1) und der Bestandteile B2) bis B5) kann in Anwesenheit eines Lösemittels oder in Substanz erfolgen. In einer bevorzugten Ausführungsform der Erfindung wird ein isocyanatgruppenhaltiges Prepolymer aus Bestandteil B1) mit den Bestandteilen B2) bis B5) in Substanz oder in Lösung hergestellt und gegebenenfalls nach Durchführung der Reaktion in Lösemitteln gelöst. Anschließend wird das Prepolymer oder die Prepolymerlösung in Wasser dispergiert. Hierbei wird bevorzugt das Prepolymer oder die Prepolymerlösung in vorgelegtes Wasser gegeben oder Wasser in die vorgelegte Prepolymerlösung gegeben und eine Kettenverlängerungsreaktion nach Schritt B) mit Polyaminen durchgeführt. Die Verlängerungsreaktion kann teilweise oder auch komplett vor dem Dispergieren erfolgen. Abschließend wird gegebenenfalls das Lösemittel abdestilliert.

Das erfindungsgemäße Verfahren zur Herstellung der wässrigen PUR-Dispersionen kann in einer oder mehreren Stufen in homogener oder - bei mehrstufiger Umsetzung - teilweise in disperser Phase durchgeführt werden. Nach vollständig oder teilweise durchgeführter Polyaddition aus B1) - B5) erfolgt ein Dispergier-, Emulgier- oder Lösungsschritt. Im Anschluss erfolgt gegebenenfalls eine weitere Polyaddition oder Modifikation in disperser Phase.

Es können im erfindungsgemäßen Verfahren die zur Beschleunigung der Isocyanatadditionsreaktion bekannten Katalysatoren, wie z. B. Triethylamin, 1,4-Diazabicyclo-[2.2.2]-octan, Dibutylzinnoxid, Zinndioktoat oder Dibutylzinndilaurat, Zinn-bis-(2-ethylhexanoat) oder andere metallorganischen Verbindungen mit vorgelegt oder später zudosiert werden.

Anschließend werden die gegebenenfalls zu Beginn der Reaktion noch nicht zugegebenen Bestandteile von B1) - B5) zudosiert.

Bei der Herstellung des Polyurethan-Prepolymers in Schritt B) beträgt das molare Stoffmengenverhältnis der Gesamtmenge von Isocyanatgruppen aus B1) zu der Gesamtmenge Isocyanat-reaktiver Gruppen aus B2) bis B5) 1,0 bis 3,5 und bevorzugt 1,2 bis 2,7.

Die Umsetzung der Komponenten B1) - B5) zum Prepolymer erfolgt teilweise oder vollständig, bevorzugt aber vollständig. Der Umsetzungsgrad wird üblicherweise durch Verfolgung des NCO-Gehalts der Reaktionsmischung überwacht. Dazu können sowohl spektroskopische Messungen, z. B. Infrarot- oder Nahinfrarot-Spektren, Bestimmungen des Brechungsindex als auch chemische Analysen, wie Titrationen, von entnommenen Proben vorgenommen werden. Diese Bestimmungsmethoden des NCO-Gehalts sind dem Fachmann bekannt. Es werden so Polyurethan-Prepolymere, die freie Isocyanatgruppen enthalten, in Substanz oder in Lösung erhalten.

Nach oder während der Herstellung der Polyurethan-Prepolymere aus B1) bis B5) erfolgt, falls dies noch nicht in den Ausgangsmolekülen durchgeführt wurde, die teilweise oder vollständige Salzbildung der anionisch und/oder kationisch dispergierend wirkenden Gruppen. Im Falle anionischer Gruppen werden dazu Basen wie Ammoniak, Ammoniumcarbonat oder -hydrogencarbonat, Trimethylamin, Triethylamin, Tributylamin, Diisopropylethylamin, Dimethylethanolamin, Diethylethanolamin, Triethanolamin, Kaliumhydroxid oder Natriumcarbonat eingesetzt, bevorzugt Triethylamin, Triethanolamin, Dimethylethanolamin oder Diisopropylethylamin. Die molare Stoffmenge der Basen liegt zwischen 50 und 150 % und bevorzugt zwischen 85 und 120 % der Stoffmenge der anionischen Gruppen. Im Falle kationischer Gruppen werden z. B. Schwefelsäuredimethylester, Bernsteinsäure oder Ameisensäure eingesetzt. Werden nur nichtionisch hydrophilierte Verbindungen B4) mit Ethergruppen verwendet, entfällt der Neutralisationsschritt. Die Neutralisation kann auch gleichzeitig mit der Dispergierung erfolgen, indem das Dispergierwasser bereits das Neutralisationsmittel enthält.

Im folgenden Verfahrensschritt werden die Verbindungen aus D) mit den noch verbliebenen Isocyanatgruppen umgesetzt. Diese Kettenverlängerung/ -terminierung kann dabei entweder in Lösungsmittel vor dem Dispergieren, während des Dispergierens oder bevorzugt in Wasser nach dem Dispergieren durchgeführt werden.

Zur Umsetzung der noch freien NCO-Gruppen in Schritt D) dienen Aminoalkohole, Mono-, Di- oder Polyamine sowie Hydrazin oder Hydrazide. Monofunktionelle Verbindungen für die Verlängerungsreaktion können Aminoalkohole und Monoamine sein, wie sie unter B3) erwähnt sind, bevorzugt Aminoalkohole oder langkettige Monoamine, wie z. B. Ethanolamin, Diethanolamin, 1-Hexylamin, 1-Octylamin, 1-Decylamin, 1-Dodecylamin, 1-Tetradecylamin, 1-Hexadecylamin, 1-Octadecylamin, 1-Eicosylamin. Als Bi- oder Polyfunktionelle Verbindungen können z. B. Ethylendiamin, 1,2- und 1,3-Diaminopropan, 1,4-Diaminobutan, 1,6-Diaminohexan, Isophorondiamin, das Isomerengemisch von 2,2,4- und 2,4,4-Trimethylhexamethylendiamin, 2-Methyl-pentamethylendiamin, Piperazin, 2,5-Dimethylpiperazin, 4,4'-Diaminocyclohexylmethan, 1,4-Diaminocyclohexan, Aminoethylethanolamin, Aminopropylethanolamin, Natrium-(2-aminoethyl)-2-aminoethylsulfonat, Diethylentriamin, Triethylentetramin, Tetraethylenpentamin, 1,3- und 1,4-Xylylendiamin, α,α,α',α'-Tetramethyl-1,3- und 1,4-xylylendiamin und 4,4'-Diaminodicyclohexylmethan, Dimethylethylendiamin, Hydrazin, Adipinsäuredihydrazid oder Oxalsäuredihydrazid verwendet werden.

Zur Umsetzung der noch freien NCO-Gruppen in Schritt D) kann auch Wasser dienen, das nicht umgesetzte Isocyanatgruppen unter Freisetzung von Kohlendioxid zu Aminen umsetzt, welche unter Kettenverlängerung mit weiteren Isocyanatgruppen reagieren können.

Der Kettenverlängerungsgrad, also das Äquivalentverhältnis der neu zugesetzten reaktiven NH-Gruppen der zur Kettenverlängerung in D) eingesetzten Verbindungen zu freien NCO-Gruppen des Prepolymers, liegt bevorzugt zwischen 0 und 1,2 und besonders bevorzugt zwischen 0,7 und 1,2.

Die Verbindungen D) können gegebenenfalls verdünnt mit Wasser und/oder einem Lösemittel im erfindungsgemäßen Verfahren einzeln oder in Mischungen eingesetzt werden, wobei grundsätzlich jede Reihenfolge der Zugabe möglich ist.

Bevorzugt erfolgt die Herstellung der erfindungsgemäßen Polyurethan-Polyharnstoff-Dispersionen, indem das lösemittelfreie oder gelöste Prepolymer oder das kettenverlängerte Polyurethanpolymer gegebenenfalls unter starker Scherung, wie z. B. starkem Rühren, entweder in das Dispergierwasser eingetragen wird oder man rührt umgekehrt das Dispergierwasser zum Prepolymer oder Polymer oder deren Lösungen.

Die so erhaltenen Dispersionen haben einen Festkörpergehalt von 10 bis 70 Gew.-%, bevorzugt 15 bis 65 Gew.-% und besonders bevorzugt 20 bis 60 Gew.-%.

Je nach Neutralisationsgrad und Gehalt ionischer Gruppen kann die Dispersion sehr feinteilig eingestellt werden, so dass sie praktisch das Aussehen einer Lösung hat, aber auch sehr grobteilige Einstellungen sind möglich, die ebenfalls ausreichend stabil sind.

Bevorzugt werden die Komponenten B2) bis B4) und D) so gewählt, dass die Summe der molaren Stoffmengen zu mehr als 70 % aus Verbindungen bestehen, die zwei gegenüber Isocyanat reaktive Gruppen besitzen und zu mehr als 95 % aus Verbindungen bestehen, die eine oder zwei gegenüber Isocyanat reaktive Gruppen besitzen, wobei Carbonsäuregruppen als nicht reaktiv gegenüber Isocyanat betrachtet werden.

Ein weiterer Gegenstand der Erfindung sind Mischungen der erfindungsgemäßen Polyurethan-Polyharnstoff-Dispersionen mit anderen wässrigen Bindemitteln und Vernetzern, die zur Herstellung von Beschichtungsmitteln eingesetzt werden. Hierbei können auch die aus der Lacktechnologie an sich bekannten Hilfs- und Zusatzmittel wie z. B. Verdicker, Füllstoffe, Pigmente, Wachse, Griffmittel, Farbstoffe, Lösungsmittel, Verlaufshilfsmittel sowie Vernetzer verwendet werden. Besonders bevorzugte Hilfs- und Zusatzmittel sind Nanopartikel, teil- oder perfluorierte Polymere und Silikone. Insbesondere bevorzugte Hilfs- und Zusatzmittel sind solche wie sie in den folgenden Schriften beschrieben sind: DE 4328917, DE 10 2004 040 266, DE19649953, WO-2005/078182, US-6171515, US-4599438, US-5385999, DE 4240274.

Ein weiterer Gegenstand der Erfindung sind Beschichtungen der erfindungsgemäßen Polyurethan-Polyharnstoff-Dispersionen und/oder deren oben genannten Mischungen auf beliebigen Substraten wie z. B. Metall, Holz, Glas, Glasfasern, Kohlefasern, Stein, keramische Mineralien, Beton, harte und flexible Kunststoffe der verschiedensten Arten, Gewebte und nicht gewebte Textilien, Leder, Spaltleder, Kunstleder, Papier, Hartfasern, Stroh und Bitumen, die vor der Beschichtung gegebenenfalls auch mit üblichen Grundierungen oder nach der Beschichtung mit gegebenenfalls weiteren Beschichtungen versehen werden können.

Bevorzugte Substrate sind Leder und Kunstleder. Besonders bevorzugte Substrate sind vollnarbiges und geschliffenes Leder sowie Spaltleder.

### BEISPIELE

Die ATR-FTIR-Messungen erfolgten mit einem Perkin Elmer Paragon 1000 mit Diamant-ATR Einheit. Die NCO-Werte wurden durch Umsetzung einer entnommenen Probe mit einem Überschuss Dibutylamin und Rücktitration mit Salzsäure bestimmt und sind in Gew-% angegeben.

### Beispiel 1:

10 g (77,4 mmol) 1-Octylamin werden bei 25 °C vorgelegt und unter Rühren 9 g (76,2 mmol / 98,4 %) 4-(Hydroxymethyl)-1,3-dioxolan-2-on zugegeben. Dabei erwärmt sich die Mischung auf 73 °C. Es wird weitere zwei Stunden bei 75 °C gerührt. Ein IR-Spektrum zeigt vollständigen Umsatz (kein Peak mehr bei 1792 cm⁻¹, neue Peaks bei 1691 cm⁻¹ und 1540 cm⁻¹).
10 g des auf diese Weise hergestellten Produkts werden zusammen mit 147,2 g (72,8 mmol) eines Polypropylenglykols mit einer mittleren Molmasse von 2022 g/mol, 41 g (40,2 mmol) eines Polypropylenglykols mit einer mittleren Molmasse von 1020 g/mol und 12,1 g (90 mmol) Dimethylolpropionsäure vorgelegt und gut durchmischt. Es werden 104,3 g (470 mmol) Isophorondiisocyanat und 7,1 g (27 mmol) Bis(4-isocyanatocyclohexyl)methane zugegeben und die Mischung für zwei Stunden auf 90 °C erhitzt. Der Rest-NCO Wert beträgt nun 6,34 %. Die Mischung wird auf 60 °C abgekühlt, 9,1 g Triethylamin eingerührt und das ganze unter starkem Rühren in 835 g Wasser (5 °C) transferiert. Zu der Dispersion wird langsam eine 10 °C kalte Lösung von 11,3 g (226 mmol) Hydrazinmonohydrat in 75 g Wasser zugetropft. Man erhält eine lagerstabile Polyurethandispersion mit einem Trockensubstanzgehalt von 25 %.

### Beispiel 2:

10 g (76,8 mmol) N-(2-Aminoethyl)morpholin werden bei 25 °C vorgelegt und unter Rühren 8,84 g (74,9 mmol / 97,5 %) 4-(Hydroxymethyl)-1,3-dioxolan-2-on zugegeben. Dabei erwärmt sich die Mischung auf 68 °C. Es wird weitere zwei Stunden bei 70 °C gerührt. Ein IR-Spektrum zeigt vollständigen Umsatz (kein Peak mehr bei 1793 cm⁻¹, neue Peaks bei 1693 cm⁻¹ und 1534 cm⁻¹). 18,84 g des auf diese Weise hergestellten Produkts werden zusammen mit 402,2 g (200 mmol) eines Polytetramethylenglykols mit einer mittleren Molmasse von 2011 g/mol und 26,8 g (200 mmol) Dimethylolpropionsäure vorgelegt und gut durchmischt. Es werden 124,3 g (560 mmol) Isophorondiisocyanat und 42 g (200 mmol) einer Isomerenmischung bestehend aus 2,2,4 und 2,4,4-Trimethylhexamethylen-1,6-diisocyanat (40:60) zugegeben und die Mischung für drei Stunden auf 85 °C erhitzt. Der Rest-NCO Wert beträgt nun 3,62 %. Die Mischung wird auf 60 °C abgekühlt, 21,2 g Triethylamin eingerührt und das ganze unter starkem Rühren in 975 g Wasser (5 °C) transferiert. Zu der Dispersion wird langsam eine 10 °C kalte Lösung von 41,8 g (246 mmol) Isophorondiamin in 150 g Wasser zugetropft. Man erhält eine lagerstabile Polyurethandispersion mit einem Trockensubstanzgehalt von 35 %.

### Beispiel 3:

10 g (70,3 mmol) N-(3-Aminopropyl)-2-pyrrolidinon werden bei 25 °C vorgelegt und unter Rühren 8 g (67,7 mmol / 96,3 %) 4-(Hydroxymethyl)-1,3-dioxolan-2-on zugegeben. Dabei erwärmt sich die Mischung auf 75 °C. Es wird weitere fünf Stunden bei 75 °C gerührt. Ein IR-Spektrum zeigt vollständigen Umsatz (kein Peak mehr bei 1793 cm⁻¹, neuer Peak bei 1534 cm⁻¹ und neue Schulter am Peak bei 1654 cm⁻¹).
18 g des auf diese Weise hergestellten Produkts werden zusammen mit 194,3 g (200 mmol) eines Polycarbonatdiols (auf Basis von 1,6-Hexandiol) mit einer mittleren Molmasse von 971,4 g/mol, 1,8 g (20 mmol) 1,4-Butandiol und 26,8 g (200 mmol) Dimethylolpropionsäure vorgelegt und gut durchmischt. Es werden 142,8 g (850 mmol) Hexamethylendiisocyanat zugegeben und die Mischung für 2,5 Stunden auf 85 °C erhitzt. Der Rest-NCO Wert beträgt nun 7,69 %. Die Mischung wird in 200 g Methylacetat gelöst und auf 35 °C abgekühlt. Es werden 20,2 g Triethylamin eingerührt und danach unter starkem Rühren 795 g Wasser (10 °C) zugegeben. Zu der Dispersion wird langsam eine 10 °C kalte Lösung von 16,7 g (334 mmol) Hydrazinmonohydrat in 75 g Wasser zugetropft. Das Methylacetat wird in einer Vakuumdestillation bei etwa 200 mbar entfernt. Man erhält eine lagerstabile Polyurethandispersion, die mit Wasser auf einen Trockensubstanzgehalt von 30 % eingestellt wird.

### Beispiel 4:

25 g (38,2 mmol) Methylpolyalkylenglykolamin (Alkylenverhältnis: Ethylen zu Propylen 3:1, mittlere Molmasse 655 g/mol) werden bei 25 °C vorgelegt und unter Rühren 4,1 g (34,7 mmol / 90,8 %) 4-(Hydroxymethyl)-1,3-dioxolan-2-on zugegeben. Dabei erwärmt sich die Mischung auf 28 °C. Es wird drei Tage bei 60 °C gerührt. Ein IR-Spektrum zeigt vollständigen Umsatz (kein Peak mehr bei 1796 cm⁻¹, neue Peaks bei 1717 cm⁻¹ und 1529 cm⁻¹).
29,1 g des auf diese Weise hergestellten Produkts werden zusammen mit 493,8 g (250 mmol) eines Polycaprolactondiols (gestartet mit Neopentylglykol) mit einer mittleren Molmasse von 1975 g/mol, 5,2 g (50 mmol) Neopentylglykol und 26,8 g (200 mmol) Dimethylolpropionsäure vorgelegt und in 206 g Aceton gelöst. Es werden 199,8 g (900 mmol) Isophorondiisocyanat und 2 g Triethylamin zugegeben und die Mischung für vier Stunden unter Rückfluss erhitzt. Der Rest-NCO Wert beträgt nun 2,85 %. Die Mischung wird auf 30 °C abgekühlt, 18,2 g Triethylamin eingerührt und unter starkem Rühren 1500 g Wasser (10 °C) zugegeben. Zu der Dispersion wird langsam eine 10 °C kalte Lösung von 17 g (283 mmol) Ethylendiamin in 100 g Wasser zugetropft. Das Aceton wird in einer Vakuumdestillation bei etwa 200 mbar entfernt. Man erhält eine lagerstabile Polyurethandispersion, die mit Wasser auf einen Trockensubstanzgehalt von 32 % eingestellt wird.

### Beispiel 5:

50 g (77,3 mmol) Polyoxyalkylendiamin (Alkylenverhältnis: Ethylen zu Propylen 2:3, mittlere Molmasse 647 g/mol) werden bei 25 °C vorgelegt und unter Rühren 9,2 g (77,9 mmol / 100,8 %) 4-(Hydroxymethyl)-1,3-dioxolan-2-on zugegeben. Dabei erwärmt sich die Mischung auf 30 °C. Es wird drei Tage bei 60 °C gerührt. Ein IR-Spektrum zeigt vollständigen Umsatz (kein Peak mehr bei 1796 cm⁻¹, neue Peaks bei 1716 cm⁻¹ und 1528 cm⁻¹). Nach Abkühlen des Produktes auf 25 °C, werden unter Rühren 7,3 g (73,7 mmol / 96,3 %) n-Butylisocyanat zugegeben. Dabei steigt die Temperatur auf 67 °C. Nach einer Stunde unter langsamem Abkühlen auf 25 °C zeigt ein IR-Spektrum vollständigen Umsatz (kein Peak bei etwa 2260 cm⁻¹, neuer Peak bei 1639 cm⁻¹, Peakvergrößerung und -verschiebung von 1528 cm⁻¹ auf 1554 cm⁻¹).
66,5 g des auf diese Weise hergestellten Produkts werden zusammen mit 153 g (150 mmol) eines Polypropylenglykols mit einer mittleren Molmasse von 1020 g/mol vorgelegt und gut durchmischt. Es werden 77,7 g (350 mmol) Isophorondiisocyanat und 0,1 g Dibutylzinndilaurat zugegeben und die Mischung für 2,5 Stunden auf 75 °C erhitzt. Der Rest-NCO Wert beträgt nun 3,08 %. Die Mischung wird in 100 g Aceton gelöst und auf 30 °C abgekühlt. Es werden unter starkem Rühren 615 g Wasser (10 °C) zugegeben. Zu der Dispersion wird langsam eine 10 °C kalte Lösung von 7,7 g (103,5 mmol) Propylendiamin in 75 g Wasser zugetropft. Das Aceton wird in einer Vakuumdestillation bei etwa 200 mbar entfernt. Man erhält eine lagerstabile Polyurethandispersion, die mit Wasser auf einen Trockensubstanzgehalt von 30 % eingestellt wird.

### Beispiel 6:

37,2 g α,ω-Di(3-aminopropyl)polydimethylsiloxan (40 mmol, mittlere Molmasse 931 g/mol) werden bei 25 °C vorgelegt und unter Rühren 4,7 g (40 mmol / 100 %) 4-(Hydroxymethyl)-1,3-dioxolan-2-on zugegeben. Dabei erwärmt sich die Mischung auf 40 °C. Es wird eine Stunde bei 60 °C gerührt. Ein IR-Spektrum zeigt vollständigen Umsatz (kein Peak mehr bei 1796 cm⁻¹, neue Peaks bei 1702 cm⁻¹ und 1541 cm⁻¹). Das Produkt wird in 500 g Methylacetat gelöst und bei 25 °C 4,1 g (41 mmol / 102,5 %) n-Butylisocyanat zugegeben. Dabei steigt die Temperatur um etwa 3 °C. Nach 10 min zeigt ein IR-Spektrum vollständigen Umsatz (kein Peak bei etwa 2260 cm⁻¹, neuer Peak bei 1632 cm⁻¹, Peakvergrößerung und -verschiebung von 1541 cm⁻¹ auf 1570 cm⁻¹).
Die auf diese Weise hergestellte Lösung von 46 g des Produkts in 500 g Methylacetat wird zusammen mit 394,2 g (400 mmol) eines Poly(hexandioladipat)diols mit einer mittleren Molmasse von 985,5 g/mol und 53,6 g (400 mmol) Dimethylolpropionsäure vorgelegt und gut durchmischt. Es werden 360,8 g (1625 mmol) Isophorondiisocyanat und 3,04 g Triethylamin zugegeben und die Mischung für vier Stunden unter Rückfluss erhitzt. Der Rest-NCO Wert beträgt nun 4,70 %. Die Mischung wird auf 40 °C abgekühlt, 40,4 g Triethylamin eingerührt und danach unter starkem Rühren 1760 g Wasser (10 °C) zugegeben. Zu der Dispersion wird langsam eine 10 °C kalte Lösung von 36,1 g (721 mmol) Hydrazinmonohydrat in 175 g Wasser zugetropft. Das Methylacetat wird in einer Vakuumdestillation bei etwa 200 mbar entfernt. Man erhält eine lagerstabile Polyurethandispersion, die mit Wasser auf einen Trockensubstanzgehalt von 30 % eingestellt wird.

## Patentansprüche

1. Verfahren zur Herstellung wässriger Polyurethan-Polyharnstoff-Dispersionen, bei denen
A) zunächst
A1) primäre und/oder sekundäre Monoamine oder Diamine mit
A2) cyclischen Carbonaten umgesetzt werden, die genau eine Hydroxylgruppe enthalten, wobei das molare Verhältnis von A1) und A2) so bemessen ist, dass im Falle von Monoaminen A1) ein rechnerisches Verhältnis der Summe der primären und sekundären Amin-Gruppen zu den cyclischen Carbonat-Gruppen von 0,8 bis 1,2 erreicht wird und im Falle von Diaminen A1) ein rechnerisches Verhältnis der Summe der primären und sekundären Amin-Gruppen zu den cyclischen Carbonat-Gruppen von 1,8 bis 2,2 erreicht wird und
A3) im Falle von Diaminen A1) die verbleibenden primären und sekundären Amin-Gruppen mit Verbindungen umgesetzt werden, die genau eine funktionelle Gruppe tragen, welche mit primären oder sekundären Aminen in einer Additionsreaktion reagiert, so dass keine isocyanatreaktiven Gruppen entstehen, wobei die Stoffmenge von A3) so bemessen ist, dass ein rechnerisches Verhältnis der Summe der rechnerisch nach Umsetzung von A1) und A2) verbleibenden primären und sekundären Amin-Gruppen zu den aminreaktiven Gruppen in A3) von 0,8 bis 1,2 erreicht wird,
wobei die Umsetzung mit A3) nach, zeitgleich oder vor der Umsetzung mit A2) erfolgen kann, und worin die Umsetzung von A1) mit A2) in Substanz ohne Lösemittel durchgeführt wird,
B) anschließend ein NCO-gruppenhaltiges Polyurethan-Prepolymer durch Umsetzung von
B1) Polyisocyanaten mit
B2) polymeren Polyolen und/oder Polyaminen mit zahlenmittleren Molekulargewichten von mehr als 400 bis 8.000 g/mol,
B3) gegebenenfalls niedermolekularen Verbindungen mit zahlenmittleren Molekulargewichten von 17 - 400 g/mol ausgewählt aus der Gruppe bestehend aus Mono- und Polyalkoholen, Mono- und Polyaminen sowie Aminoalkoholen,
B4) gegebenenfalls isocyanatreaktiven, ionisch oder potentiell ionisch hydrophilierenden Verbindungen und/oder isocyanatreaktiven nichtionisch hydrophilierenden Verbindungen und
B5) den Reaktionsprodukten aus A)
erzeugt wird,
C) das Prepolymer aus B) in Wasser dispergiert wird und
D) gegebenenfalls die noch freien NCO-Gruppen des Prepolymers mit isocyanatreaktiven Monoaminen, Polyaminen, Hydrazin und/oder Hydraziden umgesetzt werden, wobei deren Stoffmenge so bemessen ist, dass ein rechnerisches Verhältnis der isocyanatreaktiven NH-Gruppen zu den NCO-Gruppen von 0 bis 1,2 erreicht wird, wobei die Umsetzung D) teilweise oder auch vollständig vor oder während des Dispergierschritts C) erfolgen kann.

2. Verfahren gemäß Anspruch 1, worin
E) alle Umsetzungen in A) oder nur die Umsetzung mit A3) in aliphatischen Ketonen oder Estern erfolgt und/oder das aus Schritt B) erhaltene Prepolymer entweder in aliphatischen Ketonen oder Estern hergestellt und/oder nach der Umsetzung in Schritt B) in aliphatischen Ketonen oder Estern gelöst bzw. verdünnt wird und abschließend nach den Schritten A) bis D) gegebenenfalls das Lösemittel abdestilliert wird.

3. Verfahren gemäß Anspruch 1 und/oder 2, worin die Komponenten A1) Monoamine der Strukturformel (1) und/oder Diamine der Strukturformel (2) 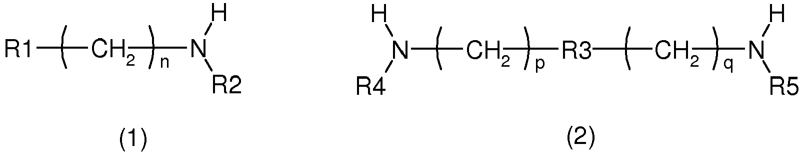 sind, wobei
R1 aus der Gruppe der Polyalkylenglykole mit Molekulargewichten bis zu 6.000 g/mol, der Kohlenwasserstoffe mit 1 bis
26 Kohlenstoffatomen, den Verbindungen bestehend aus 1-20 Kohlenstoffatomen, 0-41 Wasserstoffatomen und 1-15 der Heteroatome Bor, Silicium, Stickstoff, Phosphor, Sauerstoff, Schwefel, Chlor, Brom und/oder Iod, der teilweise und/oder vollständig fluorierten Kohlenwasserstoffe mit 1 bis 26 Kohlenstoffatomen oder der Polysiloxane mit Molekulargewichten bis zu 5.000 g/mol ausgewählt ist,
R3 aus der Gruppe der Polyalkylenglykole mit Molekulargewichten bis zu 6.000 g/mol, der Kohlenwasserstoffe mit 1 bis
26 Kohlenstoffatomen, den Verbindungen bestehend aus 1-20 Kohlenstoffatomen, 0-41 Wasserstoffatomen und 1-15 der Heteroatome Bor, Silicium, Stickstoff, Phosphor, Sauerstoff, Schwefel, Chlor, Brom und/oder Iod, der teilweise und/oder vollständig fluorierten Kohlenwasserstoffe mit 1 bis
26 Kohlenstoffatomen oder der Polysiloxane mit Molekulargewichten bis zu 5.000 g/mol ausgewählt ist,
R2, R4 und R5 unabhängig voneinander Wasserstoff oder Kohlenwasserstoffe mit ein bis 18 Kohlenstoffatomen, und
n, p, q unabhängig voneinander 0 bis 12 sind; und
worin bevorziegt die Komponenten A1) Monoamine mit der Strukturformel (3) oder Diamine mit der Strukturformel (4) 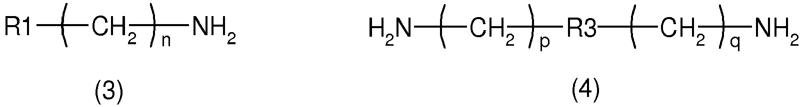
sind, wobei
R1 aus der Gruppe der Polyalkylenglykole mit Molekulargewichten bis zu 6.000 g/mol, der Kohlenwasserstoffe mit 1 bis 26 Kohlenstoffatomen, den Verbindungen bestehend aus 1-20 Kohlenstoffatomen,
0-41 Wasserstoffatomen und 1-15 der Heteroatome Bor, Silicium, Stickstoff, Phosphor, Sauerstoff, Schwefel, Chlor, Brom und/oder Iod, der teilweise und/oder vollständig fluorierten Kohlenwasserstoffe mit 1 bis 26 Kohlenstoffatomen oder der Polysiloxane mit Molekulargewichten bis zu 5.000 g/mol ausgewählt ist,
R3 aus der Gruppe der Polyalkylenglykole mit Molekulargewichten bis zu 6.000 g/mol, der Kohlenwasserstoffe mit 1 bis 26 Kohlenstoffatomen, den Verbindungen bestehend aus 1-20 Kohlenstoffatomen,
0-41 Wasserstoffatomen und 1-15 der Heteroatome Bor, Silicium, Stickstoff, Phosphor, Sauerstoff, Schwefel, Chlor, Brom und/oder Iod, der teilweise und/oder vollständig fluorierten Kohlenwasserstoffe mit 1 bis 26 Kohlenstoffatomen oder der Polysiloxane mit Molekulargewichten bis zu 5.000 g/mol ausgewählt ist,und
n, p, q unabhängig voneinander 0 bis 6 sind.

4. Verfahren gemäß einem oder mehreren der Ansprüche 1 - 3, worin die Komponenten A2) cyclische Carbonate der Strukturformel (5) 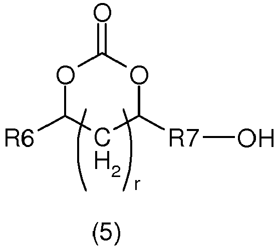 sind, wobei
R6 Wasserstoff oder ein Kohlenwasserstoffrest mit 1 bis 18 Kohlenstoffatomen,
R7 nicht vorhanden oder ein Kohlenwasserstoffrest mit 1 bis 18 Kohlenstoffatomen, und
r 0 bis 3 ist; und
worin die Komponente A2) bevorziegt 4-(Hydroxymethyl)-1,3-dioxolan-2-on ist.

5. Verfahren gemäß einem oder mehreren der Ansprüche 1 - 4, worin die Komponenten A3) Monoisocyanate sind; und
worin die Komponenten A3) bevorziegt deren Isocyanatgruppen nicht direkt mit einer aromatischen Gruppe verknüpft sind.

6. Verfahren gemäß einem oder mehreren der Ansprüche 1 - 5, worin die Komponenten B1) Diisocyanate sind; und
worin die Komponenten B1) bevorziegt Diisocyanate sind, deren Isocyanatgruppen nicht direkt mit einer aromatischen Gruppe verknüpft sind.

7. Verfahren gemäß einem oder mehreren der Ansprüche 1 - 6, worin die Summe der Komponenten B2) bis B4) und D) molar zu mehr als 70 % aus Verbindungen bestehen, die zwei gegenüber Isocyanat reaktive Gruppen besitzen und zu mehr als 95 % aus Verbindungen bestehen, die eine oder zwei gegenüber Isocyanat reaktive Gruppen besitzen, wobei Carbonsäuregruppen als nicht reaktiv gegenüber Isocyanat betrachtet werden.

8. Verfahren gemäß einem oder mehreren der Ansprüche 1 - 7, worin im Verfahrensschritt D) ein rechnerisches Verhältnis der isocyanatreaktiven NH-Gruppen zu den NCO-Gruppen von 0,7 bis 1,2 erreicht wird.

9. Verfahren gemäß einem oder mehreren der Ansprüche 1 - 8, worin das NCO-gruppenhaltige Polyurethan-Prepolymer durch die Reaktion von 10 bis 45 Gew.-% Komponente B1), 30 bis 80 Gew.-% Komponente B2), 0 bis 10 Gew.-% Komponente B3), 0 bis 20 Gew.-% Komponente B4) und 0,1 bis 40 Gew.-% Komponente B5) erhalten wird, wobei sich die Summe aller genannten Komponenten zu 100 Gew.-% aufaddiert.

10. Wässrige Polyurethan-Polyharnstoff-Dispersionen, erhältlich nach dem Verfahren gemäß einem der Ansprüche 1 bis 9.

11. Verwendung wässriger Polyurethan-Polyharnstoff-Dispersionen gemäß Anspruch 10 zur Herstellung von Beschichtungen.

12. Beschichtungen erhältlich aus wässrigen Polyurethan-Polyharnstoff-Dispersionen gemäß Anspruch 11.

13. Substrate, beschichtet mit Beschichtungen nach Anspruch 12.

14. Flexible Flächensubstrate, beschichtet mit Beschichtungen nach Anspruch 12.

15. Substrate gemäß Anspruch 14, worin das Substrat Leder oder Kunstleder ist, oder ein vollnarbiges, geschliffenes oder Spaltleder ist.

## Claims

1. A process for preparing aqueous polyurethane-polyurea dispersions which comprises
A) initially
A1) primary and/or secondary monoamines or diamines being reacted with
A2) cyclic carbonates which contain one hydroxyl group, wherein the molar ratio of A1) and A2) is determined such that in the case of monoamines A1) an arithmetic ratio of the sum of the primary and secondary amine groups to cyclic carbonate groups in the range from 0.8 to 1.2 is obtained and in the case of diamines A1) an arithmetic ratio of the sum of the primary and secondary amine groups to cyclic carbonate groups in the range from 1.8 to 2.2 is obtained, and
A3) in the case of diamines A1) the remaining primary and secondary amine groups are reacted with compounds bearing one functional group which reacts with primary or secondary amines in an addition reaction, so that no isocyanate-reactive groups are formed, wherein the amount of substance of A3) is determined such that an arithmetic ratio of the sum of the primary and secondary amine groups arithmetically remaining after reaction of A1) and A2) to amine-reactive groups in A3) in the range from 0.8 to 1.2 is obtained,
wherein the reaction with A3) can take place after, simultaneously with or before the reaction with A2), and wherein the reaction of A1) with A2) is carried out without a solvent,
B) subsequently an NCO-groupscontaining polyurethane prepolymer being produced by reaction of
B1) polyisocyanates with
B2) polymeric polyols and/or polyamines having number average molecular weights of more than 400 to 8000 g/mol,
B3) optionally low molecular weight compounds having number average molecular weights of 17-400 g/mol selected from the group consisting of mono- and polyalcohols, mono- and polyamines and amino alcohols,
B4) optionally isocyanate-reactive ionically or potentially ionically hydrophilizing compounds and/or isocyanate-reactive nonionically hydrophilizing compounds, and
B5) the reaction products from A),
C) the prepolymer from B) being dispersed in water, and
D) optionally the still free NCO groups of the prepolymer being reacted with isocyanate-reactive monoamines, polyamines, hydrazine and/or hydrazides, wherein the amount of substance thereof is determined such that an arithmetic ratio of the isocyanate-reactive NH groups to NCO groups in the range from 0 to 1.2 is obtained, wherein said reaction D) can be effected partly or also wholly before or during the dispersing step C).

2. The process according to claim 1, wherein
E) all reactions in A) or only the reaction with A3) is effected in aliphatic ketones or esters, and/or the prepolymer obtained from step B) is either prepared in aliphatic ketones or esters and/or after the reaction in step B) dissolved/diluted in aliphatic ketones or esters, and finally after steps A) to D) the solvent is optionally distilled off.

3. The process according to claim 1 and/or 2 wherein the A1) components are monoamines of structural formula (1) and/or diamines of structural formula (2) 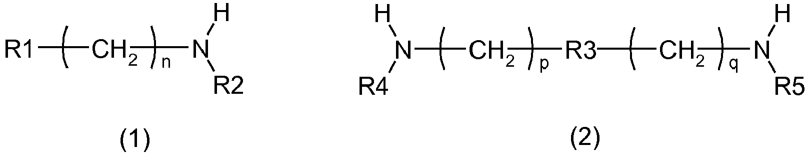 wherein
R1 is selected from the group of polyalkylene glycols having molecular weights up to 6000 g/mol, hydrocarbons having 1 to 26 carbon atoms, compounds consisting of 1-20 carbon atoms, 0-41 hydrogen atoms and 1-15 of the heteroatoms boron, silicon, nitrogen, phosphorus, oxygen, sulfur, chlorine, bromine and/or iodine, partially and/or completely fluorinated hydrocarbons having 1 to 26 carbon atoms, or polysiloxanes having molecular weights up to 5000 g/mol,
R3 is selected from the group of polyalkylene glycols having molecular weights up to 6000 g/mol, hydrocarbons having 1 to 26 carbon atoms, compounds consisting of 1-20 carbon atoms, 0-41 hydrogen atoms and 1-15 of the heteroatoms boron, silicon, nitrogen, phosphorus, oxygen, sulfur, chlorine, bromine and/or iodine, partially and/or completely fluorinated hydrocarbons having 1 to 26 carbon atoms, or polysiloxanes having molecular weights up to 5000 g/mol,
R2, R4 and R5 are each independently hydrogen or hydrocarbons having one to 18 carbon atoms, and
n, p and q are each independently from 0 to 12; and
wherein preferably the A1) components are monoamines of structural formula (3) or diamines of structural formula (4) 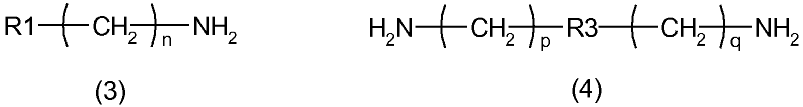
wherein
R1 is selected from the group of polyalkylene glycols having molecular weights up to 6000 g/mol, hydrocarbons having 1 to 26 carbon atoms, compounds consisting of 1-20 carbon atoms, 0-41 hydrogen atoms and 1-15 of the heteroatoms boron, silicon, nitrogen, phosphorus, oxygen, sulfur, chlorine, bromine and/or iodine, partially and/or completely fluorinated hydrocarbons having 1 to 26 carbon atoms, or polysiloxanes having molecular weights up to 5000 g/mol,
R3 is selected from the group of polyalkylene glycols having molecular weights up to 6000 g/mol, hydrocarbons having 1 to 26 carbon atoms, compounds consisting of 1-20 carbon atoms, 0-41 hydrogen atoms and 1-15 of the heteroatoms boron, silicon, nitrogen, phosphorus, oxygen, sulfur, chlorine, bromine and/or iodine, partially and/or completely fluorinated hydrocarbons having 1 to 26 carbon atoms, or polysiloxanes having molecular weights up to 5000 g/mol, and
n, p and q are each independently from 0 to 6.

4. The process according to one or more of claims 1-3, wherein the A2) components are cyclic carbonates of structural formula (5) 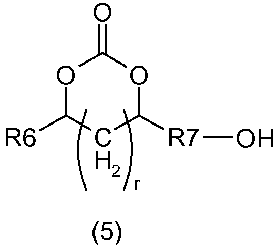 wherein
R6 is hydrogen or a hydrocarbon moiety of 1 to 18 carbon atoms,
R7 is non-present or is a hydrocarbon moiety of 1 to 18 carbon atoms, and
r is from 0 to 3; and
wherein the A2) component is preferably 4-(hydroxymethyl)-1,3-dioxolan-2-one.

5. The process according to one or more of claims 1-4, wherein the A3) components are monoisocyanates; and
wherein the A3) components preferably have their isocyanate groups not attached directly to an aromatic group.

6. The process according to one or more of claims 1-5, wherein the B1) components are diisocyanates; and
wherein the B1) components preferably are diisocyanates whose isocyanate groups are not attached directly to an aromatic group.

7. The process according to one or more of claims 1-6, wherein the sum of the B2) to B4) and D) components consist in molar terms to an extent of more than 70% of compounds having two isocyanate-reactive groups and to an extent of more than 95% of compounds having one or two isocyanate-reactive groups, wherein carboxylic acid groups are regarded as isocyanate nonreactive.

8. The process according to one or more of claims 1-7, wherein an arithmetic ratio of isocyanate-reactive NH groups to NCO groups in the range from 0.7 to 1.2 is obtained in process step D).

9. The process according to one or more of claims 1-8, wherein the NCO-groupscontaining polyurethane prepolymer is obtained by reaction of 10% to 45% by weight of component B1), 30% to 80% by weight of component B2), 0% to 10% by weight of component B3), 0% to 20% by weight of component B4) and 0.1 % to 40% by weight of component B5), wherein the sum total of all the components mentioned adds up to 100% by weight.

10. An aqueous polyurethane-polyurea dispersion obtainable by the process according to any one of claims 1 to 9.

11. The use of aqueous polyurethane-polyurea dispersions according to claim 10 in the manufacture of coatings.

12. Coatings obtainable from aqueous polyurethane-polyurea dispersions according to claim 11.

13. Substrates coated with coatings according to claim 12.

14. Flexible sheetlike substrates coated with coatings according to claim 12.

15. Substrates according to claim 14, wherein the substrate is leather or artificial leather, or is full grain, buffed or split leather.

## Revendications

1. Procédé de préparation de dispersions aqueuses de polyuréthannepolyurée, dans lequel
A) tout d'abord, on fait réagir
A1) des monoamines ou des diamines primaires et/ou secondaires, avec
A2) des carbonates cycliques, qui contiennent exactement un groupe hydroxyle, le rapport en moles de A1) à A2) étant mesuré de telle sorte que, dans le cas des monoamines A1), on atteigne un rapport théorique de la somme des groupes amino primaires et secondaires aux groupes carbonate cycliques de 0,8 à 1,2 et que, dans le cas des diamines A1), on atteigne un rapport théorique de la somme des groupes amino primaires et secondaires aux groupes carbonate cycliques de 1,8 à 2,2, et
A3) dans les cas des diamines A1), on fait réagir les groupes amino primaires et secondaires restants avec des composés qui portent exactement un groupe fonctionnel qui réagit avec des amines primaires ou secondaires dans le cadre d'une réaction d'addition de telle sorte qu'il ne se crée aucun groupe réactif vis-à-vis des isocyanates, la quantité de A3) étant mesurée de telle sorte que l'on atteigne un rapport théorique de la somme des groupes amino primaires et secondaires restant théoriquement après la réaction de A1) et de A2) aux groupes réactifs vis-à-vis des amines de A3), de 0,8 à 1,2,
la réaction avec A3) pouvant être réalisée après ou avant la réaction avec A2), ou en même temps que cette dernière, et la réaction de A1) avec A2) étant mise en oeuvre sans solvant,
B) puis on produit un prépolymère de polyuréthanne contenant des groupes NCO, par réaction
B1) de polyisocyanates, avec
B2) des polyols et/ou des polyamines polymères ayant une masse moléculaire moyenne en nombre supérieure à 400 et allant jusqu'à 8 000 g/mol,
B3) éventuellement des composés à faible masse moléculaire ayant une masse moléculaire moyenne en nombre de 17 à 400 g/mol, choisis dans le groupe consistant en les mono- et les polyalcools, les mono- et les polyamines, ainsi que les amino-alcools,
B4) éventuellement des composés hydrophilisants, ioniques ou potentiellement ioniques, réactifs vis-à-vis des isocyanates, et/ou des composés hydrophilisants non ioniques réactifs vis-à-vis des isocyanates, et
B5) les produits de la réaction de A),
C) on disperse dans de l'eau le prépolymère de B), et
D) éventuellement, on fait réagir les groupes NCO encore libres du prépolymère avec des monoamines, des polyamines, une hydrazine et/ou des hydrazides réactifs vis-à-vis des isocyanates, dont la quantité est mesurée de telle sorte que l'on atteigne un rapport théorique des groupes NH réactifs vis-à-vis des isocyanates aux groupes NCO de 0 à 1,2, la réaction D) pouvant être réalisée en partie ou aussi en totalité avant ou pendant l'étape de dispersion C).

2. Procédé selon la revendication 1, dans lequel
E) toutes les réactions de A), ou seulement la réaction avec A3), ont lieu dans des cétones ou des esters aliphatiques, et/ou le prépolymère obtenu dans l'étape B) est préparé dans des cétones ou des esters aliphatiques, et/ou, après la réaction de l'étape B), dissous ou dilué dans des cétones ou des esters aliphatiques, et, pour terminer, le solvant est éventuellement chassé par distillation après les étapes A) à D).

3. Procédé selon la revendication 1 et/ou la revendication 2, dans lequel les composants A1) sont des monoamines ayant la formule développée (1) et/ou des diamines ayant la formule développée (2) 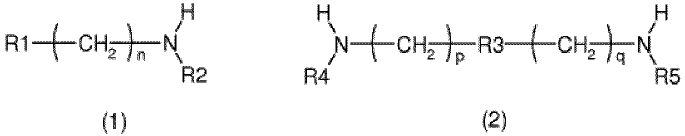 dans lesquelles
R1 est choisi dans le groupe des polyalkylèneglycols ayant une masse moléculaire allant jusqu'à 6 000 g/mol, des hydrocarbures ayant 1 à 26 atomes de carbone, des composés consistant en 1 à 20 atomes de carbone, 0 à 41 atomes d'hydrogène et 1 à 15 des hétéroatomes bore, silicium, azote, phosphore, oxygène, soufre, chlore, brome et/ou iode, des hydrocarbures en totalité et/ou en partie fluorés ayant 1 à 26 atomes de carbone, ou des polysiloxanes ayant une masse moléculaire allant jusqu'à 5 000 g/mol,
R3 est choisi dans le groupe des polyalkylèneglycols ayant une masse moléculaire allant jusqu'à 6 000 g/mol, des hydrocarbures ayant 1 à 26 atomes de carbone, des composés consistant en 1 à 20 atomes de carbone, 0 à 41 atomes d'hydrogène et 1 à 15 des hétéroatomes bore, silicium, azote, phosphore, oxygène, soufre, chlore, brome et/ou iode, des hydrocarbures en totalité et/ou en partie fluorés ayant 1 à 26 atomes de carbone, ou des polysiloxanes ayant une masse moléculaire allant jusqu'à 5 000 g/mol,
R2, R4 et R5 représentent chacun indépendamment des autres un atome d'hydrogène ou un hydrocarbure ayant 1 à 18 atomes de carbone, et
n, p, q représentent chacun indépendamment des autres 0 à 12 ; et
où de préférence les composants A1) sont des monoamines ayant la formule développée (3) et des diamines ayant la formule développée (4) 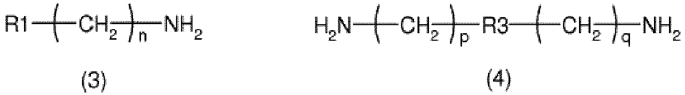 dans lesquelles
R1 est choisi dans le groupe des polyalkylèneglycols ayant une masse moléculaire allant jusqu'à 6 000 g/mol, des hydrocarbures ayant 1 à 26 atomes de carbone, des composés consistant en 1 à 20 atomes de carbone, 0 à 41 atomes d'hydrogène et 1 à 15 des hétéroatomes bore, silicium, azote, phosphore, oxygène, soufre, chlore, brome et/ou iode, des hydrocarbures en totalité et/ou en partie fluorés ayant 1 à 26 atomes de carbone, ou des polysiloxanes ayant une masse moléculaire allant jusqu'à 5 000 g/mol,
R3 est choisi dans le groupe des polyalkylèneglycols ayant une masse moléculaire allant jusqu'à 6 000 g/mol, des hydrocarbures ayant 1 à 26 atomes de carbone, des composés consistant en 1 à 20 atomes de carbone, 0 à 41 atomes d'hydrogène et 1 à 15 des hétéroatomes bore, silicium, azote, phosphore, oxygène, soufre, chlore, brome et/ou iode, des hydrocarbures en totalité et/ou en partie fluorés ayant 1 à 26 atomes de carbone, ou des polysiloxanes ayant une masse moléculaire allant jusqu'à 5 000 g/mol, et
n, p, q représentent chacun indépendamment des autres 0 à 6.

4. Procédé selon l'une ou plusieurs des revendications 1 à 3, dans lequel les composants A2) sont des carbonates cycliques ayant la formule développée (5) 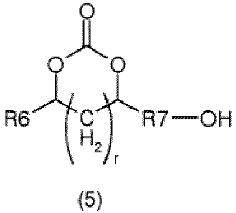 dans laquelle
R6 représente un atome d'hydrogène ou un radical hydrocarboné ayant 1 à 18 atomes de carbone,
R7 n'est pas présent ou représente un radical hydrocarboné ayant 1 à 18 atomes de carbone, et
R vaut 0 à 3 ; et
où le composant A2) est de préférence la 4-(hydroxyméthyl)-1,3-dioxolann-2-one.

5. Procédé selon l'une ou plusieurs des revendications 1 à 4, dans lequel les composants A3) sont des monoisocyanates ; et
dans lequel les composants A3), de préférence leurs groupes isocyanate, ne sont pas directement reliés à un groupe aromatique.

6. Procédé selon l'une ou plusieurs des revendications 1 à 5, dans lequel les composants B1) sont des diisocyanates ; et
dans lequel les composants B1) sont de préférence des diisocyanates, dont les groupes isocyanate ne sont pas directement reliés à un groupe aromatique.

7. Procédé selon l'une ou plusieurs des revendications 1 à 6, dans lequel la somme des composants B2) à B4) et D) est, en moles, constituée pour plus de 70 % de composés qui possèdent deux groupes réactifs vis-à-vis des isocyanates, et pour plus de 95 % de composés qui possèdent un ou deux groupes réactifs vis-à-vis des isocyanates, les groupes acide carboxylique étant considérés comme n'étant pas réactifs vis-à-vis des isocyanates.

8. Procédé selon l'une ou plusieurs des revendications 1 à 7, dans lequel, dans l'étape D) du procédé, on atteint un rapport théorique des groupes NH réactifs vis-à-vis des isocyanates aux groupes NCO de 0,7 à 1,2.

9. Procédé selon l'une ou plusieurs des revendications 1 à 8, dans lequel le prépolymère de polyuréthanne contenant des groupes NCO est obtenu par la réaction de 10 à 45 % en poids du composant B1), de 30 à 80 % en poids du composant B2), de 0 à 10 % en poids du composant B3), de 0 à 20 % en poids du composant B4) et de 0,1 à 40 % en poids du composé B5), la somme de tous les composants mentionnés faisant 100 % en poids.

10. Dispersions aqueuses de polyuréthanne-polyurée, pouvant être obtenues par le procédé selon l'une des revendications 1 à 9.

11. Utilisation de dispersions aqueuses de polyuréthanne-polyurée selon la revendication 10 pour fabriquer des revêtements.

12. Revêtements pouvant être obtenus à partir de dispersions aqueuses de polyuréthanne-polyurée selon la revendication 11.

13. Subjectiles revêtus de revêtements selon la revendication 12.

14. Subjectiles souples bidimensionnels, revêtus de revêtements selon la revendication 12.

15. Subjectiles selon la revendication 14, le subjectile étant du cuir ou du similicuir, ou étant un cuir pleine fleur, un cuir poncé ou un cuir refendu.
